# EUROPEAN PATENT APPLICATION

(11) **EP 1 882 546 A1**
(43) Date of publication of application: **30.01.2008**
(21) Application number: 07112927.4
(22) Date of filing: 23.07.2007
(51) Int. Cl.: B23Q 11/08

(54) **Protective scraper for machine tools and method for its production**

(30) Priority: 28.07.2006 IT BO20060571
(71) Applicant: P.E.I. Protezioni Elaborazioni Industriali S.r.l., 40012 Calderara di Reno (Bologna) (IT)
(72) Inventor: Mardegan, Vittorio, 26037 San Giovanni in Croce (Cremona) (IT)
(74) Representative: Lanzoni, Luciano

(57) **Abstract**

A protective scraper (1) for machine tools, with a scraper lip (4) consisting of a longitudinal free edge (5a) of a flexible strip (5) made of a polymer, has a stiff plate (6) made of a stiff polymer, placed longitudinally alongside and joined to the strip (5) and forming the element with which the scraper (1) can be fixed to the machine tool; the plate (6) and the strip (5) are obtained with respective extrusion processes and are placed longitudinally alongside one another and joined using heat, during the final step of the respective extrusion processes, so that they are stably and permanently welded together.

## Description

The present invention relates to a protective scraper for machine tools and a method for its production.

The scraper disclosed can be associated with a surface of a machine tool, having a sliding motion relative to another surface of the machine tool, so that, acting simultaneously as a brush and a seal, it prevents foreign bodies such as dirt, shavings, dusts, machining residues or machining emulsions from penetrating between the two surfaces.

In prior art scrapers the brush and seal function is guaranteed by a scraper lip consisting of a longitudinal free edge of a flexible strip made of a plastic material, usually made of vulcanised rubber. The band, parallel with and opposite the lip, with which the strip is fixed, the lip projecting, to the respective surface of the machine tool, is stiffened by a metal plate, usually made of steel. The strip band and the plate are placed on top of one another and stably and permanently joined together in the scraper production process, for example by gluing or moulding. More precisely, the plate is inserted and fixed in a cavity made in the band.

The prior art scrapers described above have rather high production costs, both due to the use of an expensive material such as steel, and because the strips and plates must be made using expensive moulds and with very low limited dimensions so that they can be joined together in an optimum lasting way.

The present invention has for an aim to produce a protective scraper for machine tools which can be produced simply and economically.

Accordingly, the present invention provides a protective scraper for machine tools with the features described in claim 1 and/or in any of the claims directly or indirectly dependent on claim 1. Accordingly the present invention also provides a method for producing a protective scraper for machine tools with the features described in claim 10 and/or in any of the claims directly or indirectly dependent on claim 10.

The present invention is now described, by way of example and without limiting the scope of application, with reference to the accompanying drawings, in which:
- Figure 1 is a cross-section of a scraper made in accordance with the present invention and associated with a machine tool;
- Figure 2 is a perspective view of two components of the scraper of Figure 1; and
- Figure 3 is a cross-section of an alternative embodiment of the scraper of Figure 1.

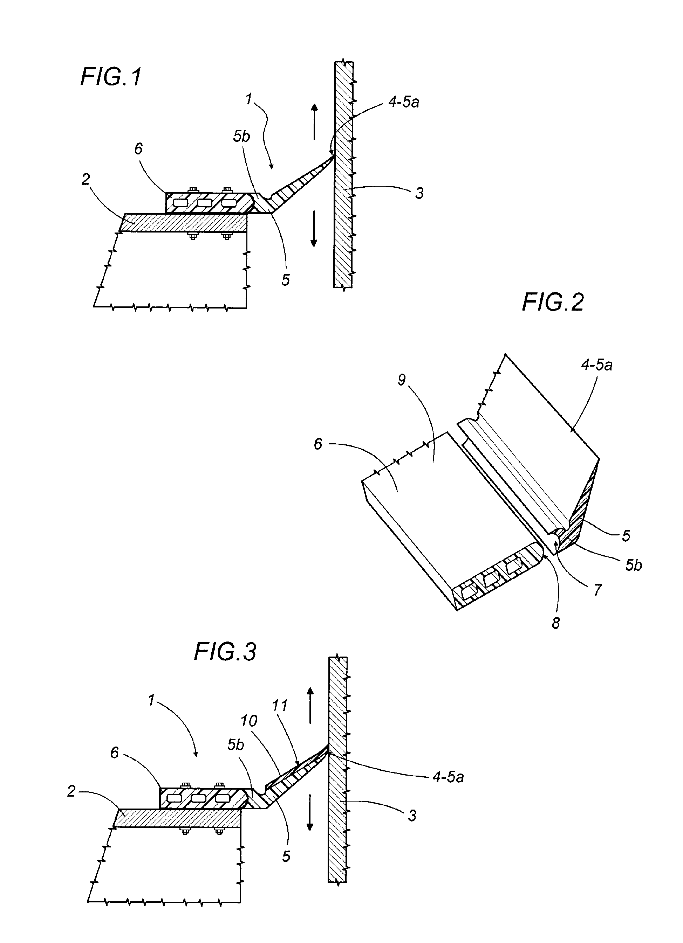

In Figure 1 the numeral 1 denotes as a whole a scraper for machine tools.

The scraper 1 can be associated with a surface 2 of a machine tool, having a sliding motion relative to another surface 3 of the machine tool, so that, acting simultaneously as a brush and a seal, it prevents foreign bodies such as dirt, shavings, dusts, machining residues or emulsions from penetrating between the two surfaces 2, 3.

Said brush and seal function is guaranteed by a scraper lip 4 consisting of a longitudinal free edge 5a of a flexible strip 5 made of a plastic material, in particular polyurethane.

The strip 5 has the prismatic shape of a wing tapered towards the scraper lip 4.

In addition to the strip 5, the scraper 1 comprises a stiff plate 6 made of a plastic material, in particular PVC, placed longitudinally alongside and stably and permanently joined to a longitudinal second edge 5b of the strip 5, opposite the edge 5a, the plate forming the element with which the scraper 1 can be fixed, for example using screws, to the machine tool.

The plate 6 has a substantially rectangular prismatic shape.

As Figure 2 shows more clearly, the second edge 5b of the strip 5 is delimited by a curved surface 7 for connection to a curved surface 8, shaped to match it, of a convex side 9 of the plate 6. In particular, the surface 7 of the strip 5 has a substantially C-shaped cross-section, with the concave part facing outwards, whilst the surface 8 of the plate 6 has its convex part facing outwards so as to adhere perfectly to the surface 7.

The surfaces 7 and 8 are connected during the final step of the extrusion processes with which the strip 5 and the plate 6 are obtained. In particular, during the final step of said processes, the strip 5 and the plate 6 are fed along respective paths which converge with one another so that they are placed longitudinally alongside one another and joined using heat, stably and permanently welding them together.

According to the alternative embodiment in Figure 3, the scraper 1 also comprises a rectangular thin sheet 10, thin and semi-rigid, made of a plastic material, in particular PVC, placed on top of and stably and permanently joined to the strip 5 to give the latter greater abrasion resistance and/or cutting resistance and/or heat resistance. In particular, the thin sheet 10 is on top of a rectangular band 11 of the strip 10, immediately alongside the scraper lip 4.

In this case, the thin sheet 10 is also obtained by means of an extrusion process and is joined to the strip 5 during the final step of the extrusion processes with which the thin sheet 10 and the strip 5 are obtained, by simply feeding the thin sheet 10 and the strip 5 along respective paths which converge with one another so that they are placed on top of one another using heat, stably and permanently welding them together.

According to an alternative embodiment not illustrated the thin sheet 10 is glued to the strip 5 after the strip has been longitudinally welded to the plate 6. In this case, the thin sheet 10 may also be made of a metal material.

The invention described above is susceptible of industrial application and may be modified and adapted in several ways without thereby departing from the scope of the inventive concept. Moreover, all details of the invention may be substituted by technically equivalent elements.

## Claims

1. A protective scraper for machine tools, comprising a scraper lip (4) consisting of a longitudinal free first edge (5a) of a flexible strip (5) made of a plastic material; **characterised in that** it comprises a stiff plate (6) made of a plastic material, placed longitudinally alongside and stably and permanently joined to a longitudinal second edge (5b) of the strip (5), opposite the first edge (5a), and forming the element with which the scraper (1) can be fixed to the machine tool.

2. The scraper according to claim 1, **characterised in that** the plate (6) and the strip (5) are obtained with respective extrusion processes and are placed longitudinally alongside one another and joined using heat, during the final step of the respective extrusion processes, so that they are stably and permanently welded together.

3. The scraper according to claim 1 or 2, **characterised in that** the strip (5) is made of polyurethane.

4. The scraper according to any of the foregoing claims from 1 to 3, **characterised in that** the plate (6) is made of PVC.

5. The scraper according to any of the foregoing claims from 1 to 4, **characterised in that** the longitudinal second edge (5b) is delimited by a curved surface (7) for connection to a curved surface (8), shaped to match it, of the plate (6); the curved surface (7) of the strip (5) having a substantially C-shaped cross-section with its concave part facing outwards.

6. The scraper according to any of the foregoing claims from 1 to 5, **characterised in that** it comprises a semi-rigid thin sheet (10) made of a plastic material, placed on top of and stably and permanently joined to the strip (5) to give the latter greater abrasion resistance and/or cutting resistance and/or heat resistance.

7. The scraper according to claim 6, **characterised in that** the thin sheet (10) is made of PVC.

8. The scraper according to claim 6 or 7, **characterised in that** the plate (6), the strip (5) and the thin sheet (10) are obtained with respective extrusion processes and are joined using heat, during the final step of the respective extrusion processes, so that they are stably and permanently welded together.

9. The scraper according to any of the claims from 1 to 8, **characterised in that** the strip (5) has the prismatic shape of a wing tapered towards the scraper lip (4).

10. A method for producing a protective scraper for machine tools, **characterised in that** it comprises a step of extruding a flexible strip (5) made of a plastic material, a longitudinal free first edge (5a) of which is designed to form a scraper lip (4); a step of extruding a stiff plate (6) made of a plastic material, designed to form the element with which the scraper (1) can be fixed to the machine tool, and a welding step, during which, with a motion bringing them alongside one another, the plate (6) is placed longitudinally alongside and stably and permanently joined to a longitudinal second edge (5b) of the strip (5), opposite the first edge (5a).

11. The method according to claim 10, **characterised in that** the plate (6) and the strip (5) are placed longitudinally alongside one another and joined, using heat, during the final step of the respective extrusion processes.

12. The method according to claim 10 or 11, **characterised in that** the strip (5) is made by extruding polyurethane.

13. The method according to any of the foregoing claims from 10 to 12, **characterised in that** the plate (6) is made by extruding PVC.

14. The method according to any of the foregoing claims from 10 to 13, **characterised in that** it comprises a step of extruding a semi-rigid thin sheet (10) made of a plastic material, and a step of placing the thin sheet (10) on top of and stably and permanently joining it to the strip (5) to give the latter greater abrasion resistance and/or cutting resistance and/or heat resistance.

15. The method according to claim 14, **characterised in that** the thin sheet (10) is made by extruding PVC.

16. The method according to claim 14 or 15, **characterised in that** the plate (6), the strip (5) and the thin sheet (10) are joined, using heat, during the final step of the respective extrusion processes, so that they are stably and permanently welded together.
